# EUROPEAN PATENT APPLICATION

(11) **EP 1 469 656 A2**
(43) Date of publication of application: **20.10.2004**
(21) Application number: 04008781.9
(22) Date of filing: 13.04.2004
(51) Int. Cl.: H04M 1/02

(54) **Mobile phone having a rotational camera lens housing**

(30) Priority: 14.04.2003 KR 2003023301; 13.08.2003 KR 2003056031
(71) Applicant: Samsung Electronics Co., Ltd., Suwon-si, Gyeonggi-do (KR)
(72) Inventor: Kim, Tae-Joong, Yeongtong-gu Suwon-si Gyeonggi-do (KR); Wee, Jong-Cheon, Yeongtong-gu Suwon-si Gyeonggi-do (KR); Song, Hyon-Myong, Yeongtong-gu Suwon-si Gyeonggi-do (KR); Kim, Hong-Bae, Yeongtong-gu Suwon-si Gyeonggi-do (KR); Kim, Jae-Shik, Yeongtong-gu Suwon-si Gyeonggi-do (KR)
(74) Representative: Grünecker, Kinkeldey, Stockmair & Schwanhäusser Anwaltssozietät

(57) **Abstract**

A mobile phone (100) having a rotational camera lens housing (40,202) is provided. The mobile phone includes a first housing (10,101) and a second housing (20,102). A hinge housing (30) rotatably connects the first housing to the second housing, a rotational camera lens housing (40,202) is contained in the hinge housing, and an exposurer (35,36,37,235,213) in the hinge housing exposes a camera lens (41) at least twice according to the rotation of the camera lens housing.

## Description

### BACKGROUND OF THE INVENTION

### 1. Field of the Invention

The present invention relates generally to a mobile phone for performing audio or video communications, and in particular, to a mobile phone having a rotational camera lens housing to facilitate photographing an object.

### 2. Description of the Related Art

In general, a mobile phone is a device that a user carries with to communicate wirelessly with another party. For portability, the trend of the mobile phone is toward small size, lightweight, and diverse functions. Thus, future mobile phones will be small and lightweight, and used for multiple functions and purposes. They will also be modified adaptively according to a variety of multimedia or Internet environments. The mobile phone is an electronic device commonly used all over the world, irrespective of age and gender, and people now consider it a necessity to daily living.

Existing mobile phones are categorized according to their looks. For example, there are a bar type, a flip type, and a folder type. The bar-type phone has a bar-shaped single housing, the flip-type one has a flip rotatable with respect to a hinge device in a housing, and the folder-type is configured that a bar-type housing is rotatably folded by a hinge device.

Mobile phones are also categorized into a neck wearable type or a wrist type according to the ways of carrying them. As their names imply, the neck wearable phone is worn around a neck using a string, and the wrist type is worn around a wrist.

According to their opening or closing ways, mobile phones are divided into a rotation type or a sliding type. For the rotation-type mobile phone, two facing housings are rotatably connected and opened/closed correspondingly. The sliding-type mobile phone is opened/closed by the lengthwise sliding movement of two housings. These classified mobile phones are known to those skilled in the art.

Besides voice communications, the conventional mobile phones have been developed to further provide a high-rate data communication. Along with increasing user demands, high-rate data transmission is serviced using radio communication technology.

Currently, the mobile phones transmit video signals by adopting camera lenses. The existing camera lens modules are in-built or attached to the mobile phone to perform a video call or photograph an object. To photograph an object from two or more directions, a mobile phone must be equipped with as many camera lens modules. Therefore, product cost is increased.

### SUMMARY OF THE INVENTION

It is, therefore, an object of the present invention to provide a mobile phone including a camera lens that can be exposed in three axis-directions.

It is another object of the present invention to provide a cost-effective mobile phone including a single camera lens module.

The above objects are achieved by a mobile phone including a rotational camera lens housing and a camera lens assembly.

According to one aspect of the present invention, the mobile phone includes a first housing and a second housing. A hinge housing rotatably connects the first housing to the second housing, a rotational camera lens housing is contained in the hinge housing, and an exposurer in the hinge housing exposes a camera lens at least twice according to the rotation of the camera lens housing.

According to another aspect of the present invention, the mobile phone includes a first housing and a second housing. The second housing rotates in an advancing or receding direction to or from the first housing around a first hinge axis, facing the first housing, and turns crosswise to the first housing around a second hinge axis perpendicular to the first hinge axis. A hinge housing is extended along the first hinge axis between the first and second hinge housings. A rotational camera lens housing is rotatably contained in the hinge housing and rotates around a third hinge axis perpendicular to the first hinge axis and spaced from the second hinge axis. An exposurer is formed in the hinge housing and exposes a camera lens at least twice according to the rotation of the camera lens housing around the third hinge axis.

According to a further aspect of the present invention, in the camera lens assembly, a cylindrical camera lens hinge arm is formed at a side portion of the mobile phone, and provides a first hinge axis defined lengthwise and a third hinge axis perpendicular to the first hinge axis. A camera lens housing is included in the camera lens hinge arm, and rotates around the respective first and third hinge axes. A first control knob is rotatably engaged with an end of the camera lens hinge arm, and rotates the camera lens housing around the first hinge axis. A second control knob is rotatably engaged on the outer circumferential surface of the camera lens hinge arm, and rotates the camera lens housing around the third hinge axis.

According to still another aspect of the present invention, in the camera lens assembly for a mobile phone, a cylindrical camera lens hinge arm is formed at a side portion of the mobile phone, and provides a first hinge axis defined lengthwise and a third hinge axis perpendicular to the first hinge axis. A first rotational member is engaged rotatably around the first hinge axis in the camera lens hinge arm. A camera lens housing is engaged with the first rotational member rotatably around the third hinge axis. A second rotational member is linked to the first rotational member via the camera lens housing, moves along the first hinge axis, and rotates the camera lens housing around the third hinge axis.

According to yet another aspect of the present invention, the mobile phone includes a first housing and a second housing, which is connected to the first housing rotatably around a hinge axis extended in one direction. A hinge housing rotatably connects the first housing to the second housing. A rotational camera lens housing is contained in the hinge housing. The camera lens housing rotates within the hinge housing in the manner that allows photographing along the hinge axis and in a direction perpendicular to the hinge axis.

### BRIEF DESCRIPTION OF THE DRAWINGS

The above and other objects, features, and advantages of the present invention will become more apparent from the following detailed description when taken in conjunction with the accompanying drawings in which:
FIG. 1 is a perspective view of a mobile phone with a second housing closed to a first housing according to a preferred embodiment of the present invention;
FIG. 2 is a perspective view of the mobile phone illustrated in FIG. 1 with the second housing fully opened from the first housing around a first hinge axis;
FIG. 3 is a perspective view of the mobile phone illustrated in FIG. 1 with the second housing turned at 90° crosswise to the first housing around a second hinge axis;
FIG. 4 is a side perspective view of the mobile phone illustrated in FIG. 1 with the second housing slightly opened;
FIG. 5 is a rear perspective view of the mobile phone illustrated in FIG. 1 with the second housing slightly opened;
FIG. 6 is a perspective view of the mobile phone illustrated in FIG. 1 with the second housing closed to the first housing after the second housing is turned around at 180° around the second hinge axis;
FIG. 7 is a partial cut-away rear view of a rotational camera lens housing with an angle controller for manually controlling the rotational angle of the camera lens housing, when the second housing is fully opened from the first housing in the mobile phone illustrated in FIG. 1;
FIG. 8 is a perspective view of a mobile phone with a second housing closed to a first housing according to another preferred embodiment of the present invention;
FIG. 9 is a perspective view of the mobile phone illustrated in FIG. 8 with the second housing fully opened from the first housing around the first hinge axis;
FIG. 10 is a rear perspective view of the mobile phone illustrated in FIG. 8 with the second housing fully opened from the first housing around the first hinge axis;
FIG. 11 is a perspective view of the mobile phone illustrated in FIG 8 with the second housing turned at 90° crosswise to the first housing around the second hinge axis in a first direction;
FIG. 12 is a perspective view of the mobile phone illustrated in FIG 8 with the second housing turned at 90° crosswise to the first housing around the second hinge axis in a second direction;
FIG. 13 is an exploded perspective view of a camera lens assembly for the mobile phone illustrated in FIG. 8;
FIG. 14 is an exploded perspective view of the camera lens assembly illustrated in FIG. 13, viewed at a different angle;
FIG. 15 is a view depicting assembly of the camera lens assembly illustrated in FIG. 13;
FIG. 16 is an exploded perspective view illustrating another embodiment of a camera lens assembly for the mobile phone illustrated in FIG. 8;
FIG. 17 is an exploded perspective view of an enlargement of the camera lens assembly illustrated in FIG. 16;
FIG. 18 is a perspective view of the camera lens assembly illustrated in FIG. 16 in an assembled state; and
FIG. 19 is a perspective view of a camera lens housing rotated around a third hinge axis in the camera lens assembly illustrated in FIG. 13.

### DETAILED DESCRIPTION OF THE PREFERRED EMBODIMENTS

Preferred embodiments of the present invention will be described herein below with reference to the accompanying drawings. In the following description, well-known functions or constructions are not described in detail because they would obscure the invention in unnecessary detail.

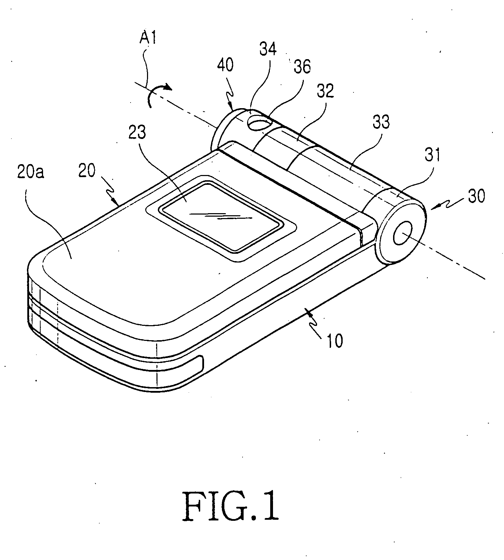

Referring to FIGs. 1 to 5, a mobile phone according to an embodiment of the present invention includes a first housing 10, a second housing 20 rotatably connected to the first housing 10 so that the second housing 20 can recede from the first housing 10 or rotate crosswise to the first housing 10, a hinge housing 30 rotatably connecting the first and second housings 10 and 20 to each other, a rotational camera lens housing 40 contained at an end of the hinge housing 30, and an exposurer in the camera lens housing 40, for exposing a camera lens at least twice. An angle controller for manually adjusting the rotational angle of the camera lens housing 40 around a predetermined hinge axis is also included.

The second housing 20 is rotatably connected to the first housing such that the second housing 20 can recede away from the facing first housing 10 or advance toward the first housing 10 around a first hinge axis A1. The second housing 20 can be turned crosswise to the first housing 10 around a second hinge axis A2 perpendicular to the first hinge axis A1. The hinge housing 30 is extended in the form of a cylinder to define the first and second hinge axes A1 and A2 and rotatably holds the camera lens housing 40 inside. The camera lens housing 40 is rotatable within the hinge housing 30 around a third hinge axis A3.

With regard to the relationship among the first, second, and third hinge axes A1, A2, and A3, the second hinge axis A2 rotates around the first hinge axis A1 and is perpendicular to the first hinge axis A1. The third hinge axis A3 is perpendicular to the first hinge axis A1, while it is parallel, perpendicular, or tilted to the second hinge axis A2.

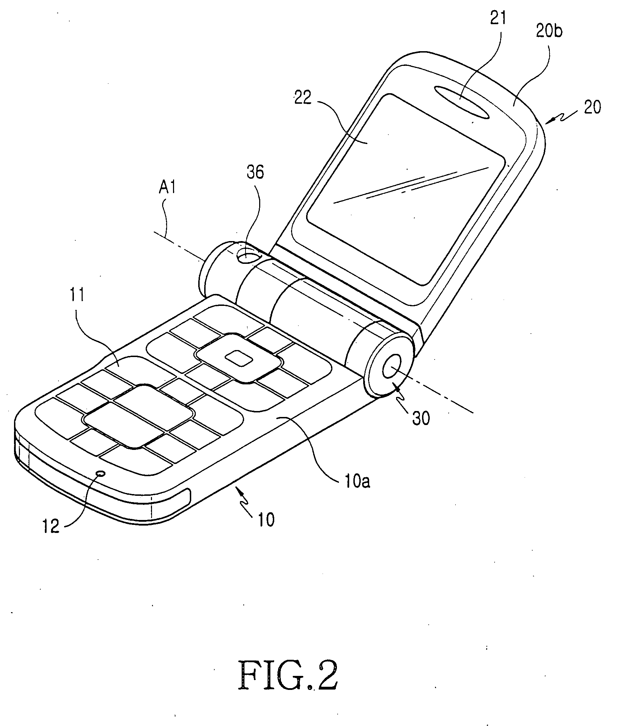

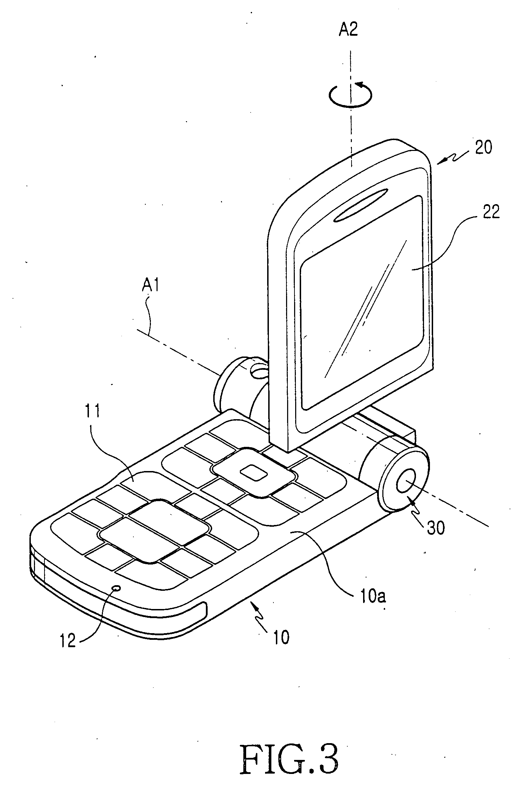

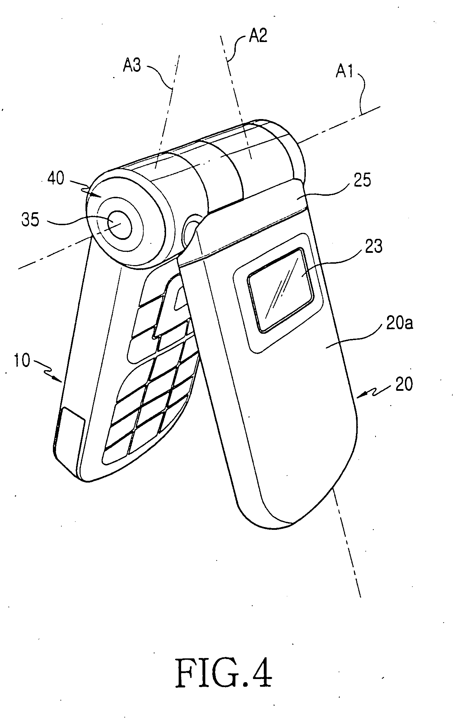

The relationship among the first, second and third hinge axes A1, A2, and A3 will be described in more detail with reference to FIGs. 1 to 4. Referring to FIG. 1, when the second housing 20 is closed to the first housing 10, the second hinge axis A2 is parallel to the third hinge axis A3, while the second and third hinge axes A2 and A3 are perpendicular to the first hinge axis A1. Referring to FIG. 2, when the second housing 20 is fully opened from the first housing 10, the second hinge axis A2 is tilted to the third hinge axis A3. Referring to FIG. 3, when the second housing 20 is opened at 90° from the first housing 10, the second hinge axis A2 is perpendicular to the third hinge axis A3, apart from each other, and also perpendicular to the first hinge axis A1. When the mobile phone is placed in the state illustrated in FIG. 4, the first, second, and third hinge axes A1, A2, and A3 are in the same relationship as illustrated in FIG. 1.

Hereinbelow, the structures of the first and second housings 10 and 20, the hinge housing 30, and the camera lens housing 40 will be described in more detail.

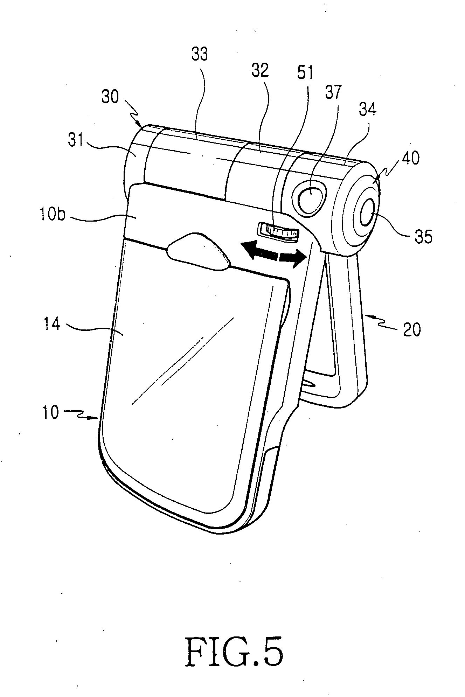

Referring to FIGs. 2 and 5, the first housing 10 has a key array 11 with a plurality of keys and a nearby microphone 12 on its top surface 10a. A battery pack 14 is detachably installed on the bottom surface 10b of the first housing 10.

Referring to FIGs. 2 and 4, the second housing 20 has an auxiliary display 23 on its top surface 20a and a main display 22 on its bottom surface 20b. A speaker 21 is positioned near the main display 22. An auxiliary frame 25 is interposed between the second housing 20 and the hinge housing 30. The second housing 20 is connected to the auxiliary frame 25 rotatably around the second hinge axis A2. The auxiliary frame 25 extends in the direction of the first hinge axis A1.

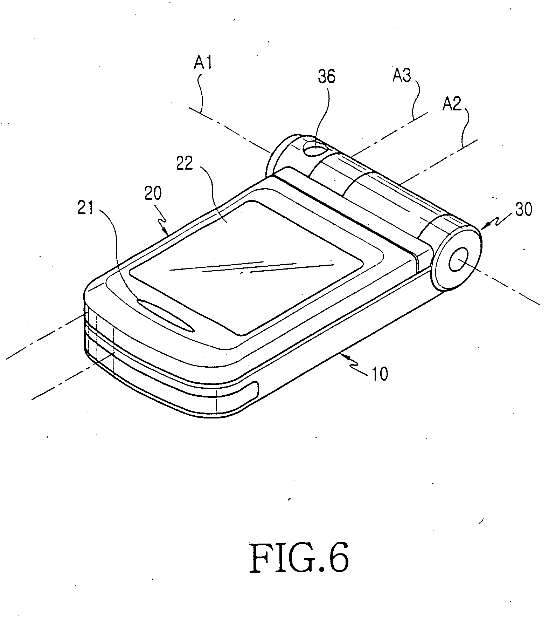

Referring to FIGs. 1 and 4, the hinge housing 30 comprises a pair of side hinge arms 31 and 32 integrally connected to the first housing 10, a center hinge arm 33 integrally connected to the second housing 20, specifically the auxiliary frame 25 between the side hinge arms 31 and 32, and a camera lens hinge arm 34 at one side of the side hinge arm 31, for containing the camera lens housing 40 therein. A hinge module (not shown) is installed in the center hinge arm 33 and the auxiliary frame 25 to enable the second housing 20 to rotate around the first and second hinge axes A1 and A2. By rotating around the first and second hinge axes A1 and A2, the second housing 20 can be brought into close contact with the first housing 10 with the main display 22 exposed, as is illustrated in FIG. 6.

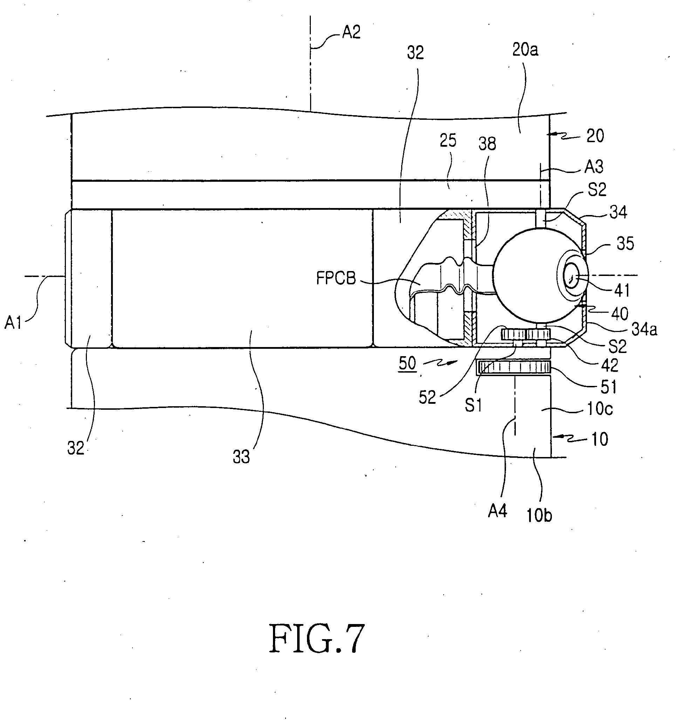

The camera lens hinge arm 34 has the exposurer for exposing a camera lens (41 in FIG. 7) in the camera lens housing 40. The exposurer is comprised of first, second, and third openings 35, 36, and 37 formed in the camera lens hinge arm 34. The first opening 35 is formed on a side surface 34a of the camera lens hinge arm 34 along the first hinge axis A1. The second opening 36 is formed on a surface of the camera lens hinge arm 34 facing a user when the second housing 20 is closed to the first housing 10 as illustrated in FIG. 1. The third opening 37 is formed in a position opposite to the second opening 36 with respect to the third hinge axis A3. The second and third openings 36 and 37 are on the outer surface of the camera lens hinge arm 34.

The first opening 35 is larger in diameter than the second and third openings 36 and 37. The second and third openings 36 and 37 of the same shape are apart from each other, symmetrically with respect to the third hinge axis A3.

The camera lens housing 40 may be cylindrical, though it is shown as spherical. The camera lens housing 40 is installed to be rotatable with respect to the third hinge axis A3, having the camera lens 41 exposed from its outer circumferential surface. The outer circumferential surface of the camera lens housing 40 is partially exposed from the first opening 35 and the camera lens 41 can be positioned in any of the first, second, and third openings 35, 36, and 37.

Preferably, the camera lens housing 40 rotates around the third hinge axis A3 within a predetermined first angle. The first angle can be 180° or less. It is shown as 180°. However, if the second and third openings 36 and 37 are formed in different positions, the first angle may be changed.

The structure of an angle controller 50 for manually controlling the camera lens housing 40 will be described below with reference to FIG. 7. In FIG. 7, the angle controller 50 is formed at an edge 10c of the bottom surface of the first housing 10, particularly, near the camera lens hinge arm 34.

The angle controller 50 includes a teeth gear 51 partially protruding from a through hole formed at the edge 10c of the bottom surface of the first housing 10, and one or more gears 42 and 52 for transferring the rotational force of the teeth gear 51 to the camera lens housing 40. The teeth gear 51 rotates with respect to a fourth hinge axis A4 by a user's manual manipulation. The third hinge axis A3 and the fourth hinge axis A4 are parallel to each other.

Part of the teeth gear 51 protrudes outward, while its remaining part is held in the first housing 10. The second gear 52 is at en end of a rotational shaft S1 of the teeth gear 51. In the camera lens housing 40, a rotational shaft S2 is extended along the third hinge axis A3 and the third gear 42 is on the rotational shaft S2. The second gear 52 is engaged with the third gear 42. As the teeth gear 51 rotates, the second gear 52 rotates. Simultaneously, the third gear 42 rotates, which in turn rotates the camera lens housing 40. The rotation of the camera lens housing 40 displaces the camera lens 41 coaxially with a selected one of the first, second, and third openings 35, 36, and 37. At the position, the camera lens 41 captures an object.

A CCD (Charged Coupled Device: not shown) is installed in the camera lens housing 40 and connected to a main board (not shown) of the first housing 10 by an FPCB (Flexible Printed Circuit Board). The FPCB is directed to the first housing 10 via a through opening 38 and the side hinge arm 32.

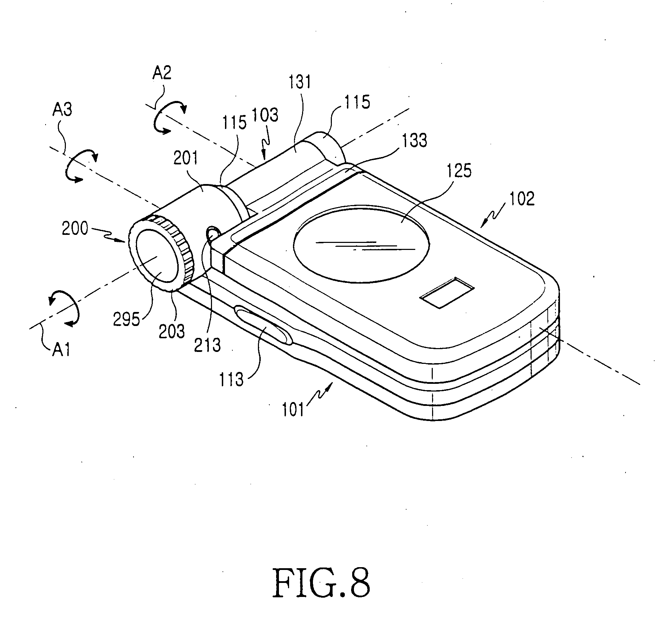

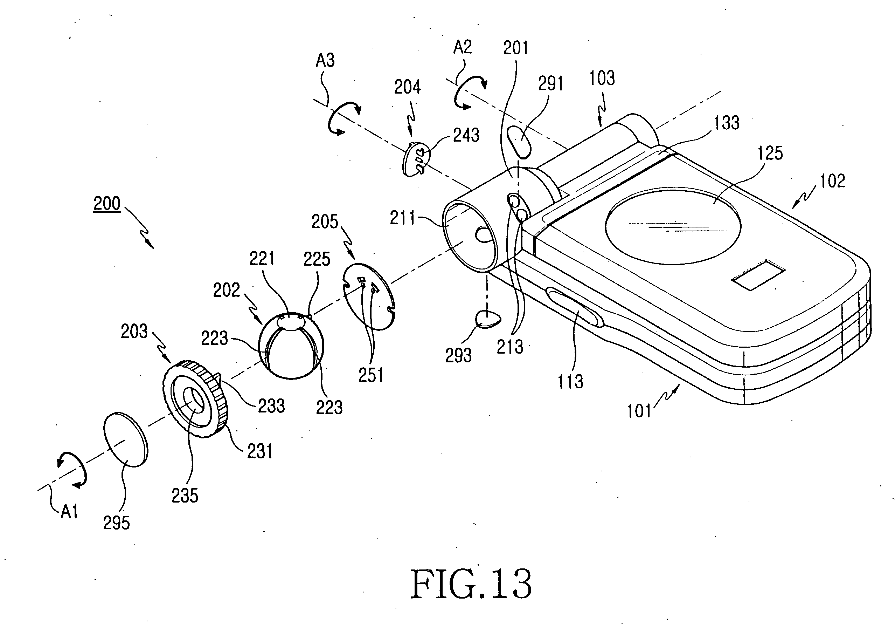

Referring to FIGs. 8 to 12, a mobile phone 100 according to another embodiment of the present invention includes a first housing 101, a second housing 102, which is connected to the first housing 101 in such a manner that it can be rotated in a receding direction from the first housing 101 or turned crosswise to the first housing 101, and a camera lens assembly 200 at a portion of the mobile phone 100. The camera lens assembly 200 comprises a rotational camera lens housing 202 in FIG. 13, a camera lens hinge arm 201 at a portion, specifically, at an upper portion of the mobile phone 100, for holding the camera lens housing 202 therein, and exposurers 235, 213, and 217 defined on the camera lens hinge arm 201, for exposing the camera lens housing 202 at least twice. Further, the camera lens assembly 200 includes angle controllers 203 and 204 for controlling the rotational angle of the camera lens housing 202 around predetermined hinge axes by user manipulation.

A key array 111 having a plurality of keys is installed on the top surface of the first housing 101. A 2-way key 113 is provided on a side of the first housing 101. The 2-way key 113 can be used for menu selection or volume adjustment in a speech mode or standby mode. It can also provide a zoom-in/zoom-out functionality during photographing a still image or a moving picture. A pair of side hinge arms 115 face each other, spaced by a predetermined distance on the upper end of the first housing 101, and the camera lens hinge arm 201 is extended from one of the side hinge arms 115.

The second housing 102 has an auxiliary display 125 on its top surface and a main display 121 on its bottom surface. A speaker 123 is disposed above the main display 121. The second housing 102 is connected to the first housing 101 in such a manner that it can be rotated face to face in a receding/advancing direction from/toward the first housing 101 and turned crosswise to the first housing 101. The connection is made by means of a predetermined connection member 103.

The connection member 103 has a center hinge arm 131 between the side hinge arms 115. It rotates around a first hinge axis A1 extended widthwise from the first housing 101. The connection member 103 also has an auxiliary frame 133 at a portion of the center hinge arm 131, thus defining a second hinge axis A2 perpendicular to the first hinge axis A1. An end portion of the second housing 102 is engaged with the auxiliary frame 122 to rotate around the second hinge axis A2.

The camera lens hinge arm 201 is extended in the direction of the first hinge axis A1 from the side hinge arm 115 and contains the camera lens housing 202 therein. The camera lens housing 202 is rotatable around the first hinge axis A1 within the camera lens hinge arm 201. At the same time, it is rotatable around a third hinge axis A3 perpendicular to the first hinge axis A1. The camera lens hinge arm 201 includes the angle controllers 203 and 204 for adjusting the rotational angle of the camera lens housing 202. The angle controllers 203 and 204 are rotatably engaged with the camera lens hinge arm 201. The angle controller 203 is a first control knob for rotating the camera lens housing 202 around the first hinge axis A1. The angle controller 204, rotatably engaged at a predetermined position of the outer circumferential surface of the camera lens hinge arm 201, is a second knob for rotating the camera lens housing 202 around the third hinge axis A3.

The exposurers 235, 213, and 217 are a first opening (exposurer 235) in FIG. 13 for exposing the camera lens housing 202 in a side direction of the camera lens hinge arm 201, a second opening (exposurer 213) for exposing the camera lens housing 202 in a frontal direction of the mobile phone 100, and a third opening (exposurer 217) for exposing the camera lens housing 202 in a rear direction of the mobile phone 200. That is, the camera lens housing 202 is rotated around the first, second, and third hinge axes A1, A2, and A3 within the camera lens hinge arm 201 to enable photography of a still image or a moving picture through the first, second, or third exposurer 235, 213, or 217. The second exposurer 213 has a pair of holes that enables a user to select a photograph angle according to the angle at which the second housing 102 is opened.

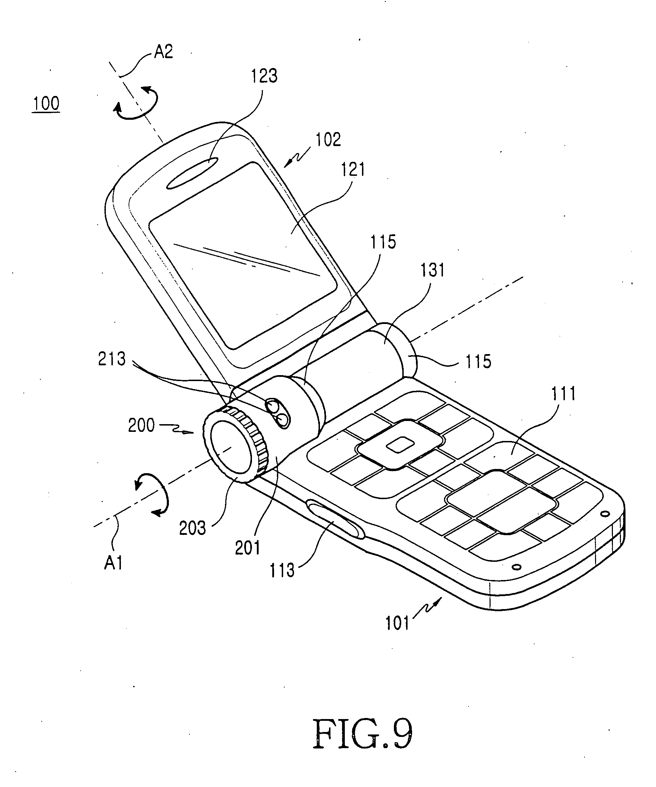

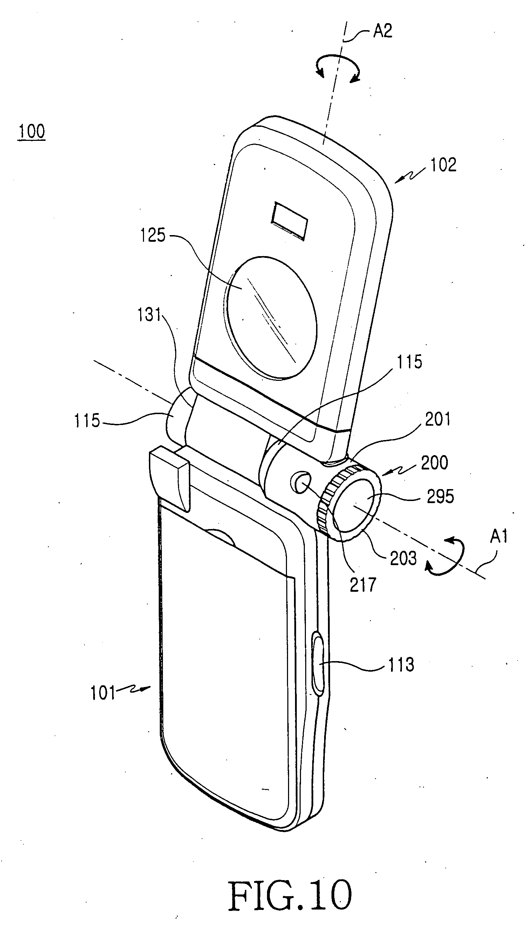

FIGs. 9 and 10 are perspective views of the mobile phone 100 with the second housing 102 fully opened in a receding direction from the first housing 101. With the second housing 102 fully opened from the first housing 101, the main display 121 is directed toward the front of the mobile phone 100. If the user intends to photograph a still image or moving picture, he rotates the camera lens housing 202 is rotated in a manner that exposes the camera lens housing 202 through the second or third exposurer 213 or 217.

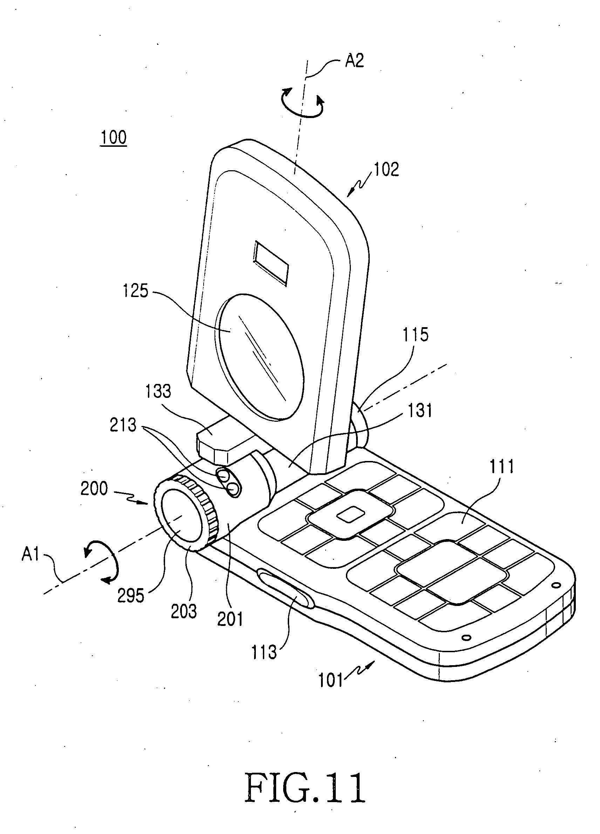

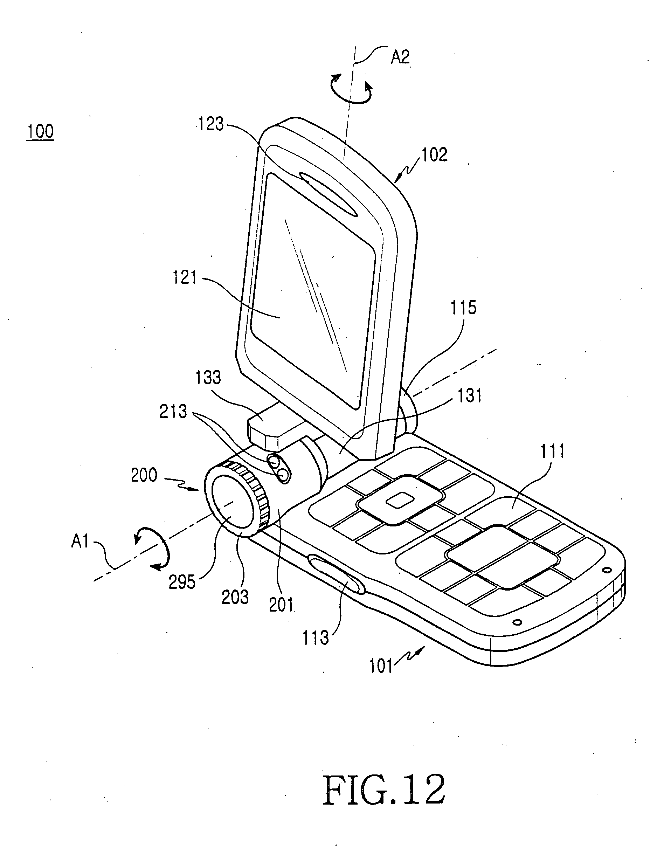

FIGs. 11 and 12 are perspective views of the mobile phone 100 where the second housing 102 is opened at a predetermined angle from the first housing 101 and then turned crosswise to the first housing 101. When the second housing 101 is opened at a predetermined angle, specifically about 90° or above from the first housing 101, it can rotate around the second hinge axis A2. Thus, the main display 121 faces in a selected one of both directions of the mobile phone 100. In photographing a still image or moving picture, the user rotates the camera lens housing 202 in the manner that exposes the camera lens housing 202 through the first exposurer 235. With the camera lens housing 202 exposed through the first exposurer 235 and the main display 121 positioned as illustrated in FIG. 11, the user can manipulate the mobile phone 100 in the same manner as a camcorder.

As in the first embodiment of the present invention, since the second housing 102 can rotate around the respective first and second hinge axes A1 and A2, the main display 121 can be exposed outward while the second housing 102 is in close contact with the first housing 101.

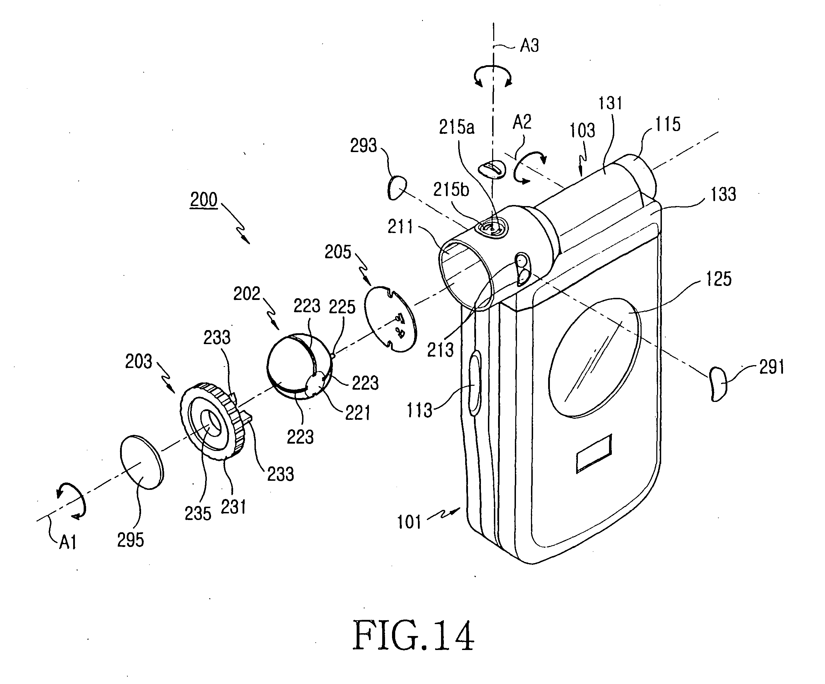

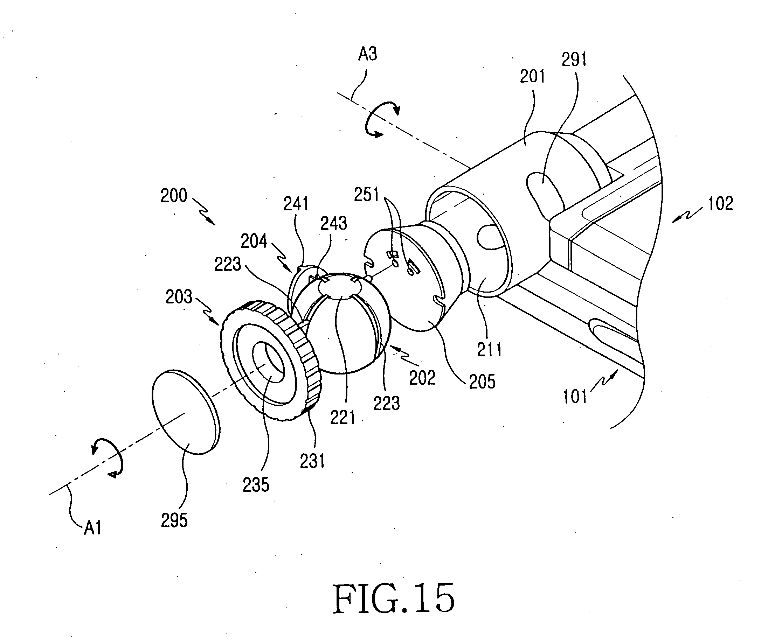

FIGs. 13 to 15 illustrate the camera lens assembly 200 for the mobile phone illustrated in FIG. 8. The camera lens assembly 200 comprises the camera lens hinge arm 201, the camera lens housing 202, the first and second control knobs 203 and 204, and the exposurers 235, 213, and 217.

The camera lens hinge arm 201 is integrally formed with one side hinge arm 115 of the first housing 101 and provides a space 211 opened in a side direction of the mobile phone 100. The camera lens housing 202 is held in the space 211 to rotate around the first hinge axis A1 and the third hinge axis A3 perpendicular to the first hinge axis A1. The opened side portion of the camera lens hinge arm 201 is closed with the first control knob 203. The first control knob 203 rotates around the first hinge axis A1, which in turn rotates the camera lens housing 202 around the first hinge axis A1. The second control knob 204 is rotatably installed at a predetermined position of the outer circumferential surface of the camera lens housing 202, specifically on the third hinge axis A3. The second control knob 204 rotates around the third hinge axis A3, which in turn rotates the camera lens housing 202 around the third hinge axis A3.

A pair of guide grooves 223 are formed circumferentially on the outer circumferential surface of the camera lens housing 202 to provide a rotation trajectory to the camera lens housing 202. The guide grooves 223 cross each other at predetermined positions and the intersections (not shown) are symmetrical with respect to the respective first and third hinge axes A1 and A3. Preferably, the guide grooves 223 are perpendicular to each other at the intersection. The first and second control knobs 203 and 204 are provided with guide protrusions 233 and 243 in correspondence with the guide grooves 223.

The first control knob 203 includes the first guide protrusion 233 which is extended in a diameter direction on its inner side surface facing the camera lens housing 202, protruding in the direction of the first hinge axis A1, for fitting into one of the guide grooves 223, and a plurality of protrusions 231 on its outer circumferential surface. The second control knob 204 is formed on the outer circumferential surface of the camera lens hinge arm 201 so that its inner surface faces the camera lens housing 202. The second guide protrusions 243 are extended in a diameter direction on the inner surface of the second control knob 204, protruding in the direction of the third hinge axis A3, for fitting into the other guide groove 223.

When the user rotates the first or second control knob 203 or 204, with the rotational force, the guide protrusion 233 or 243 in engagement with the guide groove 223 rotates the camera lens housing 202. In turn, the first or second guide protrusion 233 or 243 guides the rotation of the camera lens housing 202.

For example, if the user rotates the first control knob 203, the first guide protrusion 233 in engagement with the guide groove 223 rotates the camera lens housing 202 around the first hinge axis A1. At the same time, the second guide protrusions 243 guide the rotation of the camera lens housing 202 because the guide groove 223 is in engagement with the second guide protrusions 243.

To install the second control knob 204, a mounting groove 215a is formed to a predetermined depth from the outer circumferential surface of the camera lens hinge arm 201 and rotation holes 215b are formed in the mounting groove 215a in order to position the second guide protrusions 243 of the second control knob 204 within the space 211. The mounting groove 215a is centered on the third hinge axis A3, and the rotation holes 215b can be formed within a predetermined angular range with respect to rotation around the third hinge axis A3. That is, the rotation holes 215b can limit the rotational range of the second control knob 204.

The exposurers 235, 213, and 217 are means for exposing a camera lens 221 in the camera lens housing 201 in a photograph direction. They are the first opening directed along the first hinge axis A1, the second opening directed toward the front of the mobile phone 100, and the third opening directed toward the rear of the mobile phone 100, respectively. The first 235 is formed through the first control knob 203 along the first hinge axis A1. The second exposurer 213 can be a pair of through holes spaced from each other by a predetermined distance on the outer circumferential surface of the camera lens hinge arm 201. The third exposurer 217 is positioned symmetrically with the second exposurer 213 on the outer circumferential surface of the camera lens hinge arm 201. That is, the second and third exposurers 213 and 217 are symmetrical on the camera lens hinge arm 201 with respect to the respective hinge axes A1 and A3. Because the second exposurer 213 has the pair of adjacent through holes along the circumferential direction of the camera lens hinge arm 201, the user can photograph an object at various angles using the mobile phone 100. The exposurers 235, 213, and 217 are preferably sealed with transparent acryl or glass covers 291, 293, and 295.

A tension plate 205 is fixed within the camera lens hinge arm 201 to prevent the movement of the camera lens housing 202 after rotation. The tension plate 205 is brought into close contact with a surface of the camera lens housing 202 by its accumulated elastic force and thus prevents the unintended movement of the camera lens housing 202. A stopper protrusion 225 is formed on the surface of the camera lens housing 202 facing the tension plate 205 and stopper holes 251 are formed at a predetermined interval on the tension plate 205 along the rotation trajectory of the stopper protrusion 225 to thereby stop the rotation of the camera lens housing 202 at the predetermined interval. The stopper protrusion 225 can be formed on the tension plate 205 and the stopper holes 251 are formed at the predetermined interval on the outer circumferential surface of the camera lens housing 202.

The thus-constituted camera lens assembly 200 is so configured that the camera lens housing 202 can rotate within the camera lens hinge arm 201 with respect to the respective hinge axes A1 and A3. Therefore, photography can be carried out not only in various directions but also in the same manner as with a camcorder by directing the main display 121 in a side direction of the mobile phone 100.

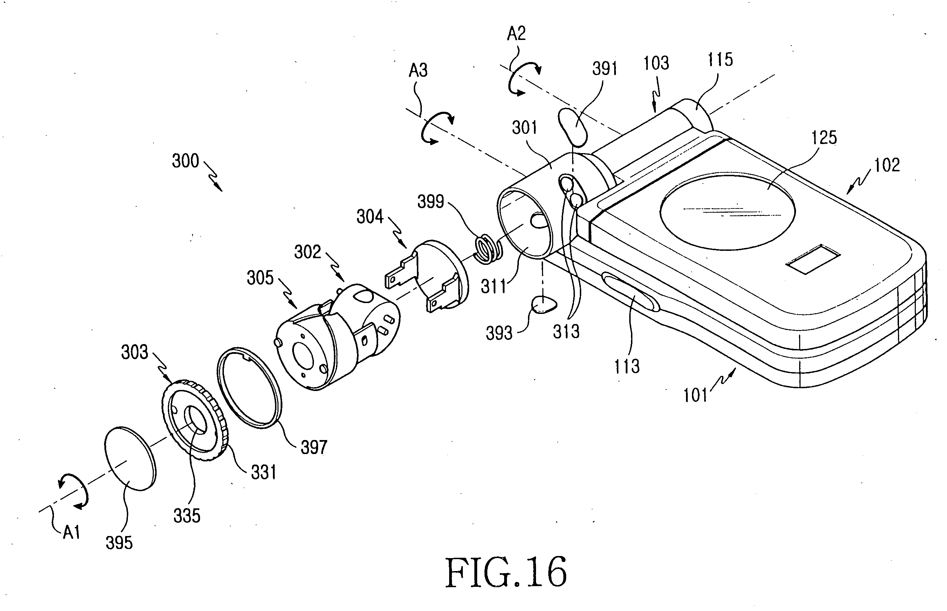

FIGs. 16 to 19 illustrate a camera lens assembly 300 for the mobile phone 100 illustrated in FIG. 8 according to another embodiment of the present invention. As illustrated, the camera lens assembly 300 comprises a camera lens hinge arm 301, first and second rotational members 304 and 305, a camera lens housing 302, and a control knob 303.

The camera lens hinge arm 301 extends along the first hinge axis A1 from one side hinge arm 115, opened at one side and thus providing a space 311. A second opening 3 13 having a pair of through holes is formed on the outer circumferential surface of the camera lens hinge arm 301, and a third opening (not shown) is formed symmetrically with the second opening 313 with respect to the first and third hinge axes A1 and A3. The exposurers for the camera lens hinge arm 301 will be apparent by referring to the above-described embodiment.

The first rotational member 304 is contained in the camera lens hinge arm 301 rotatably around the first hinge axis A1. One or more first link arms 341 are protruded along the first hinge axis A1 from one surface of the first rotational member 304. A link hole 343 is formed at an end portion of each of the first link arms 341.

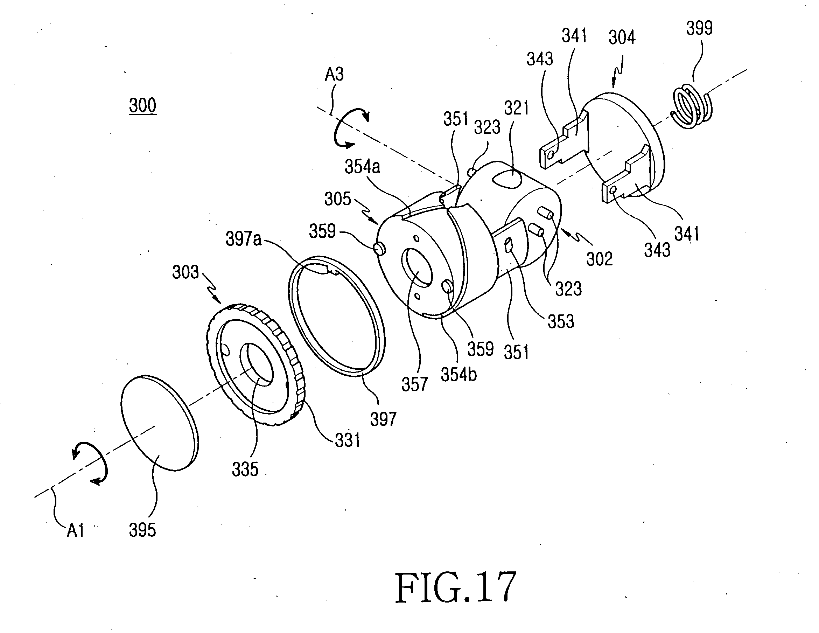

The second rotational member 305 is contained in the camera lens hinge arm 301 rotatably around the first hinge axis A1. It is linked to the first rotational member 304 in the manner that enables the second rotational member 305 to make a linear reciprocal movement along the first hinge axis A1. One or more second link arms 351 protrude along the first hinge axis A1 from one surface of the second rotational member 305, facing the first link arms 341. A link hole 353 is formed at an end portion of each of the second link arms 351. It is to be noted here that the link holes 343 or 353 are elongated in a direction in which the second rotational member 305 moves linearly, that is, in a direction perpendicular to the first hinge axis A1. Referring to FIG. 17, the link holes 353 are shown elongated in the embodiment of the present invention. To expose the camera lens 321 in the camera lens housing 302, the second rotational member 305 is provided with exposing holes 355 and 357 respectively at an end portion and at a predetermined position of the outer circumferential surface.

Guide slopes 354a and 354b are also defined on the outer circumferential surface of the second rotational member 305. The guide slops 354a and 354b are steep and slow respectively to an end of the second rotational member 305. As described later in more detail, the guide slopes 354a and 354b restrict the rotational ranges of the first and second rotational members 304 and 305, or prevent the movement of the first and second rotational members 304 and 305 away from the camera lens hinge arm 301.

The camera lens housing 302 is like a cylinder extended along the third hinge axis A3. It has a camera lens 321 at a predetermined position of its outer circumferential surface and a pair of link protrusions 323 on both ends. The link protrusions 323 are selectively inserted into the link holes 343 and 353. That is, the first and second rotational members 304 and 305 are linked to each other via the camera lens housing 302 and the first and second link arms 341 and 351 are formed preferably in pairs to stabilize the link connection.

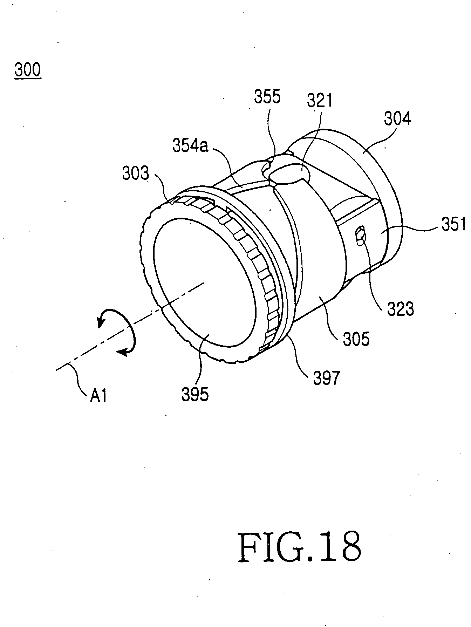

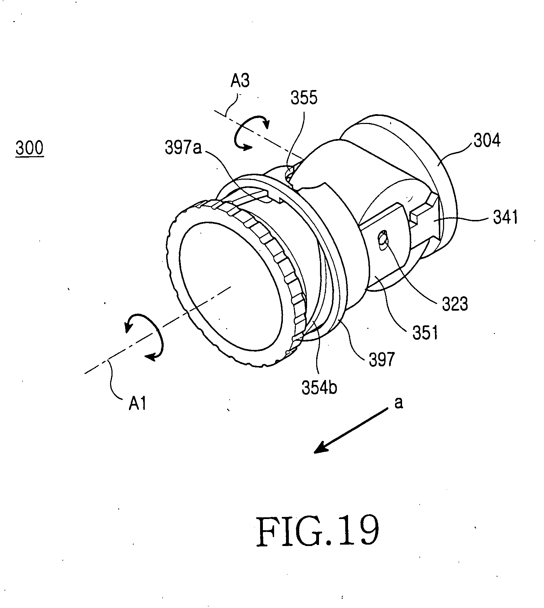

Accordingly, as the second rotational member 305 moves linearly along the first hinge axis A1, the camera lens housing 302 rotates around the third hinge axis A3. Referring to FIGs. 18 and 19, with the first and second rotational members 304 and 305 in as close contact as possible, the camera lens 321 is exposed from the hole 355. If the second rotational member 305 moves in an arrowed direction "a", the camera lens 321 is exposed from the hole 357. That is, as the second rotational member 305 moves linearly along the first hinge axis A1, the camera lens housing 302 rotates around the third hinge axis A3. Because the link holes 353 of the second link arms 351 are elongated, it provides room in which the link protrusions 323 move by the rotation of the camera lens housing 302.

One or more engagement protrusion 359 is formed on the other end surface of the second rotational member 305 to be engaged with the control knob 303.

The control knob 303 is engaged with the end of the second rotational member 305. The control knob 303 has a first opening 335 penetrating there through, and a plurality of protrusions 331 on its outer circumferential surface. The first opening 335 is used to expose the camera lens 321. That is, the camera lens 321 in the camera lens housing 302 can capture an object through one of the first, second, and third openings 335 and 313 according to user selection. Preferably, the first, second, and third openings 335 and 313 are sealed with transparent acryl or glass covers 391, 393, and 395.

A guide ring 397 is fit around the end of the camera lens hinge arm 301 to prevent the movement of the first and second rotational members 304 and 305 and the camera lens housing 302 away from the camera lens hinge arm 301. The guide ring 397 has a guide rib 397a protruding from its inner surface. The guide rib 397a is formed in correspondence with the guide slopes 354a and 354b formed on the outer circumferential surface of the second rotational member 305.

As illustrated in FIG. 19, as the second rotational member 305 moves linearly along the first hinge axis A1, the guide rib 397a restricts an excessive movement of the second rotational member 305. Also, as the second rotational member 305 rotates, the guide rib 397a moves along the slow slope 354b, moving the second rotational member 305 toward the first rotational member 304.

A coil spring 399 is positioned within the camera lens hinge arm 301 to provide elastic force to the first rotational member 304. Thus, the first and second rotational members 304 and 305 and the camera lens housing 302 are rotated smoothly around the first hinge axis A1.

In the camera lens assembly 300, as the second rotational member 305 moves linearly along the first hinge axis A1, the camera lens housing 302 is directed to the first or second opening 335 or 313. By rotating the control knob 303 with respect to the first hinge axis A1, the camera lens housing 302 is directed to the second opening 313 or the third opening. When the control knob 303 is rotated with the camera lens housing 302 directed to the first opening 335, the camera lens 321 is directed to the third opening by the guide rib 397a and the slow guide slope 354b.

As described above, the mobile phone of the present invention is user-friendly and cost-effective because two or more photograph directions are available by use of one camera lens module.

While the present invention has been shown and described with reference to certain preferred embodiments thereof, it will be understood by those skilled in the art that various changes in form and details may be made therein without departing from the spirit and scope of the invention as defined by the appended claims.

## Claims

1. A mobile phone comprising:
a first housing;
a second housing;
a hinge housing for rotatably connecting the first housing to the second housing;
a rotational camera lens housing contained in the hinge housing, and
an exposurer formed in the hinge housing, for exposing a camera lens in a plurality of positions according to the rotation of the camera lens housing.

2. The mobile phone of claim 1, **characterized by** said second housing for rotating in an advancing and receding direction to and from the first housing around a first hinge axis, facing the first housing, and turning cross wise to the first housing around a second hinge axis, which is perpendicular to the first hinge axis;
said hinge housing extending along the first hinge axis between the first and second housing; and
said rotational camera lens contained in the hinge housing for rotating around the third hinge axis perpendicular to the first hinge axis and spaced a predetermined distance from the second hinge axis.

3. The mobile phone according to claim 1 or 2, wherein the exposurer comprises:
a first opening formed on a first side surface of the hinge housing;
a second opening formed on an outer circumferential surface of the hinge housing; and
a third opening spaced a predetermined distance from the second opening.

4. The mobile phone according to claim 3, wherein the second opening is spaced a predetermined distance from the third hinge axis.

5. The mobile phone according to claim 3 or 4, wherein the first opening is larger than the second and third openings, and the second and third openings are identical in shape.

6. The mobile phone according to one of the previous claims,
**characterized by** an angle controller for manually controlling a rotational angle of the camera lens housing.

7. The mobile phone according to claim 6, wherein the angle controller is formed on an edge of a bottom surface of the first housing, adjacent to the camera lens housing.

8. The mobile phone according to claim 6 or 7, wherein the angle controller comprises:
a teeth gear partially protruding from an edge of the first housing, for rotating with respect to a hinge axis parallel to a hinge axis of the camera lens housing; and
at least one gear installed in the hinge housing, for transferring rotational force of the teeth gear to the camera lens housing.

9. The mobile phone according to one of the previous claims, wherein the camera lens housing is spherical in shape.

10. The mobile phone according to one of the previous claims, wherein the first housing comprises:
a key array including a plurality of keys arranged on a top surface of the first housing;
a microphone; and
a battery pack attached to a bottom surface of the first housing.

11. The mobile phone according to one of the previous claims, wherein the second housing comprises:
an auxiliary display on a top surface of the second housing;
a main display on a bottom surface of the second housing; and a speaker.

12. The mobile phone according to one of the previous claims, wherein the hinge housing comprises:
a pair of side hinge arms integrally formed with the first housing; a center hinge arm between the side hinge arms, integrally formed with the second housing; and
a camera lens hinge arm formed along a hinge axis of the side hinge arms.

13. The mobile phone according to one of the previous claims, wherein the camera lens housing is contained in the hinge housing to be rotatable within a predetermined first angle around a predetermined rotational axis.

14. The mobile phone according to claim 13, wherein the predetermined first angle is 180°.

15. The mobile phone according to one of the previous claims, wherein when the second housing is closed to the first housing, the second hinge axis is parallel to the third hinge axis, when the second housing is fully opened from the first housing, the second hinge axis is tilted to the third hinge axis, and when the second housing is opened at 90° from the first housing, the second hinge axis is perpendicular to the third hinge axis.

16. The mobile phone according to one of the previous claims, wherein the second hinge axis rotates around the first hinge axis and is perpendicular to the first hinge axis, and the third hinge axis is one of parallel, perpendicular, and tilted to the second hinge axis.

17. The mobile phone according to claim 13, wherein the angle is between 90° and 180°.

18. The mobile phone according to claim 7, wherein the angle controller comprises:
a teeth gear partially protruding from an edge of the first housing, for rotating around a fourth hinge axis parallel to the third hinge axis of the camera lens housing; and at least one gear installed in the first housing, for transferring a rotational force of the teeth gear to the camera lens housing.

19. A camera lens assembly for a mobile phone, comprising:
a cylindrical camera lens hinge arm at a side portion of the mobile phone, for providing a first hinge axis defined lengthwise and a third hinge axis perpendicular to the first hinge axis;
a camera lens housing contained in the camera lens hinge arm, for rotating around the first and third hinge axes;
a first control knob rotatably engaged with an end of the camera lens hinge arm, for rotating the camera lens housing around the first hinge axis; and
a second control knob rotatably engaged on an outer circumferential surface of the camera lens hinge arm, for rotating the camera lens housing around the third hinge axis.

20. The camera lens assembly of claim 19, wherein the first control knob is positioned on the first hinge axis and rotates around the first hinge axis, and the second control knob is positioned on the third hinge axis and rotates around the third hinge axis.

21. The camera lens assembly of claim 19, wherein the first control knob has a first opening penetrating along the first hinge axis.

22. The camera lens assembly of claim 19, wherein the camera lens hinge arm comprises a pair of second openings adjacently positioned on an outer circumferential surface of the camera lens hinge arm, and a third opening opposite to the second openings with respect to the third hinge axis.

23. The camera lens assembly of claim 19, further comprising:
a pair of guide grooves formed circumferentially on the outer circumferential surface of the camera lens housing to provide a rotation trajectory to the camera lens housing, and crossing each other at predetermined positions, the intersections of the guide grooves being symmetrical with respect to the respective first and third hinge axes;
a first guide protrusion protruding along the first hinge axis from an inner surface of the first control knob and fit into one of the guide grooves; and
a second guide protrusion protruding along the third hinge axis from the inner surface of the second control knob and fit into the other guide groove.

24. The camera lens assembly of claim 23, further comprising:
a mounting groove sunk from the outer circumferential surface of the camera lens hinge arm; and
a rotation hole formed in the mounting groove, in correspondence with the second guide protrusion, for protruding the second guide protrusion inward the camera lens hinge arm,
wherein the second control knob is symmetrical with respect to the third hinge axis and the rotation hole is formed within a predetermined angular range with respect to the rotation of the second control knob around the third hinge axis.

25. The camera lens assembly of claim 19, further comprising:
a stopper protrusion protruding along the first hinge axis from a surface of the camera lens housing, spaced a predetermined distance from the first hinge axis;
a tension plate fixed within the camera lens hinge arm, facing the camera lens housing, and brought into close contact with the camera lens housing by elastic force; and
at least one stopper hole formed on the tension plate along a rotation trajectory of the stopper protrusion.

26. A camera lens assembly for a mobile phone, comprising:
a cylindrical camera lens hinge arm at a side portion of the mobile phone, for providing a first hinge axis defined lengthwise and a third hinge axis perpendicular to the first hinge axis;
a first rotational member engaged rotatably around the first hinge axis in the camera lens hinge arm;
a camera lens housing engaged with the first rotational member rotatably around the third hinge axis; and
a second rotational member linked to the first rotational member via the camera lens housing, for moving along the first hinge axis and rotating the camera lens housing around the third hinge axis.

27. The camera lens assembly of claim 26, further comprising:
at least one first link arm extended along the first hinge axis from the first rotational member;
at least one second link arm extended along the first hinge axis from the second rotational member, facing the first link arm; and
at least one pair of link protrusions formed on the camera lens housing and rotatably engaged with ends of the first and second link arms.

28. The camera lens assembly of claim 27, wherein the camera lens housing is cylindrical and includes a pair of link protrusions at each of both ends of the camera lens housing.

29. The camera lens assembly of claim 27, further comprising a pair of first link arms and a pair of second link arms and link holes are formed on ends of the first and second link arms, in correspondence with the link protrusions.

30. The camera lens assembly of claim 29, wherein the link holes on the ends of the second link arms are elongated in a direction perpendicular to the first hinge axis.

31. The camera lens assembly of claim 26, wherein the second rotational member comprises an exposing opening formed along the first hinge axis.

32. The camera lens assembly of claim 26, further comprising a knob engaged with an end of the second rotational member, for rotating the first rotational member, the camera lens housing, and the second rotational member around the first hinge axis.

33. The camera lens assembly of claim 26, wherein the camera lens hinge arm comprises a pair of second openings adjacently positioned on the outer circumferential surface of the camera lens hinge arm, and a first opening opposite to the second openings with respect to the third hinge axis.

34. A mobile phone comprising:
a first housing;
a second housing connected to the first housing rotatably around a hinge axis extended in one direction;
a hinge housing for rotatably connecting the first housing to the second housing; and
a rotational camera lens housing contained in the hinge housing,
wherein the camera lens housing rotates within the hinge housing to enable photographing along the hinge axis and in a direction perpendicular to the hinge axis.
